# EUROPEAN PATENT APPLICATION

(11) **EP 3 882 397 A1**
(43) Date of publication of application: **22.09.2021**
(21) Application number: 21000065.9
(22) Date of filing: 04.03.2021
(51) Int. Cl.: E02B 3/06, E02B 3/14

(54) **POLYHEDRAL ISOLATED MONOBLOC STRUCTURE FOR OPEN ARTIFICIAL REEF AND REEF COMPRISING A PLURALITY OF SUCH ISOLATED STRUCTURES**

(30) Priority: 06.03.2020 IT 202000004801
(71) Applicant: Hallmann Annabel Barbara, 98123 Messina (IT); La Spada Antonio Enrico Christoph, 98168 Messina (IT)
(72) Inventor: La Spada, Antonino, I-98168 MESSINA (IT); La Spada, Francesco, I-98168 MESSINA (IT)
(74) Representative: Garavelli, Paolo

(57) **Abstract**

A monobloc structure (10) is described comprising a base volume (11), an upper surface (15) and at least three lateral surfaces (12, 13, 14), each comprising at least one irregular polyhedral volume (16) projecting therefrom, configured to deflect and deflect incident wave motion and/or return flows; further described is an open artificial reef (100) comprising a plurality of said isolated monobloc structures (10).

## Description

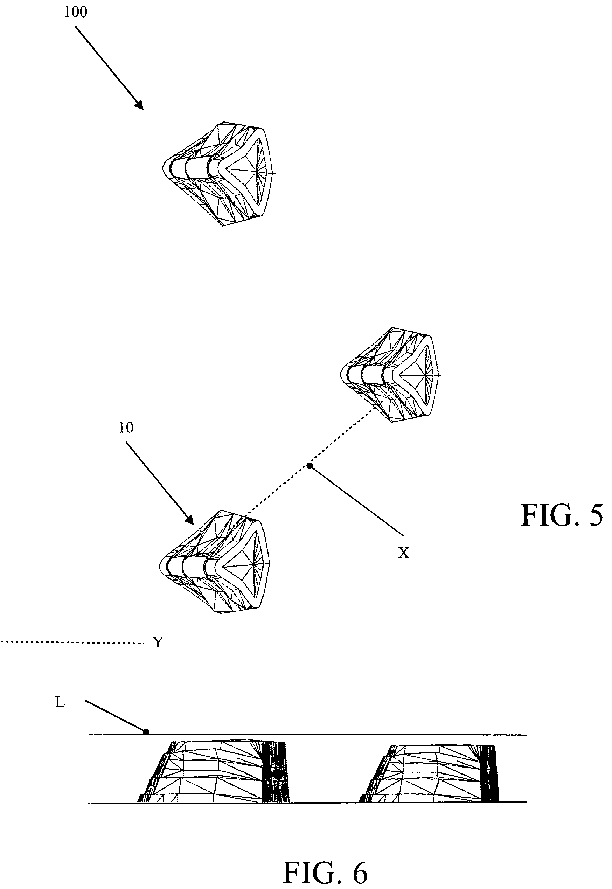

The present invention relates to an isolated polyhedral monobloc structure for an open artificial reef and to a reef comprising a plurality of said isolated structures; in particular, the invention refers to a monobloc structure, called spur, as an efficient structure to weaken a hydrodynamic field and as a structure for the composition of an open breakwater comprising isolated polyhedral monobloc structures. More particularly, the present invention refers to an artificial reef comprising isolated polyhedral monobloc structures that can be positioned on the shoreline, to protect works, or on the seabed, submerged or partially emerging from the mean sea level L (Fig. 6) and which occupy to a minimum extent the surface of the seabed or the beach, in an isolated and discontinuous way, favoring the natural propagation of the wave motion, without triggering reflective effects on the seabed or refractive and erosive effects on the neighboring beaches and favoring the reconstruction of the beaches.

In the art, invasive rigid barriers of the surface of the seabed are known, submerged or emerging, parallel or inclined with respect to the shore line or placed on the beach structured in different shapes to form accumulations of stone or concrete materials.

These rigid barriers, however, are not satisfactory since, in particular those positioned on the seabed, they have the problem of blocking the continuity of the seabed and of the wave motion incident towards the shore with reflective effects capable of heavily affecting the morphology of the seabed, in particular causing ditches of erosion at the base of the barriers, compromising their stability and favoring the increase in energy of the wave motion, as well as lateral refraction effects with consequent erosion of the neighboring beaches; these reflection effects are amplified over time and generally lead to the systematic disappearance of the coastal strip in the breakwater area with deviations of the aggregates on the deeper seabed to total damage to the beaches with the alteration of the underwater ecosystem.

Object of the present invention is solving the aforementioned prior art problems, providing an isolated polyhedral monobloc structure and an open artificial reef comprising a plurality of said polyhedral structures located on the seabed, thereby supporting the natural evolution and function of the incident wave motion with the contextual reactive actions that are released, ensure a reduction in speed and allow the reconstruction of the beach; in particular, they contribute to restoring the optimal natural conditions for the abatement of the wave motion by the beach, both submerged and emerging.

A further object of the present invention is favoring optimal environmental conditions, such as light and water circulation, for the flourishing of the marine biocoenosis on the isolated structures located on the seabed.

The aforementioned and other objects and advantages of the invention, which will emerge from the following description, are achieved with an insulated polyhedral monobloc structure for an open artificial reef and a reef comprising a plurality of said structures, such as those described in the respective independent claims. Preferred embodiments and non-trivial variants of the present invention form the subject of the dependent claims.

It is understood that all attached claims form an integral part of the present description.

It will be immediately obvious that innumerable variations and modifications (for example relating to shape, dimensions, arrangements and parts with equivalent functionality) can be made to what is described, without departing from the scope of the invention as appears from the attached claims.

The present invention will be better described by some preferred embodiments, provided by way of non-limiting example, with reference to the attached drawings, in which:

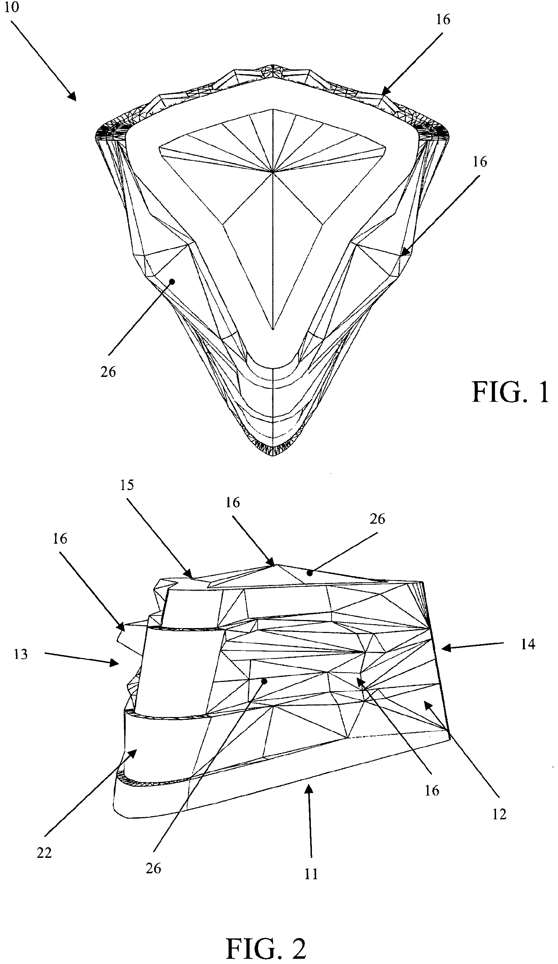

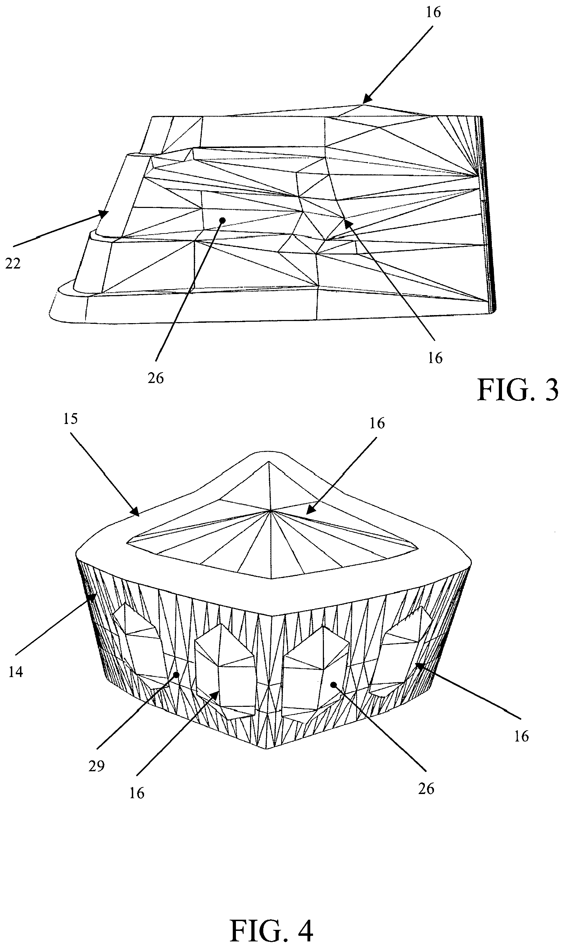

Figures 1 to 4 show perspective views of an insulated polyhedral monobloc structure for open artificial reef in an embodiment of the present invention;
Figures 5 and 6 show views of an open artificial reef comprising a plurality of isolated polyhedral monobloc structures according to the present invention;
Figures 7 and 8 show perspective views of an isolated polyhedral monobloc structure for open artificial reef in an embodiment of the present invention; and

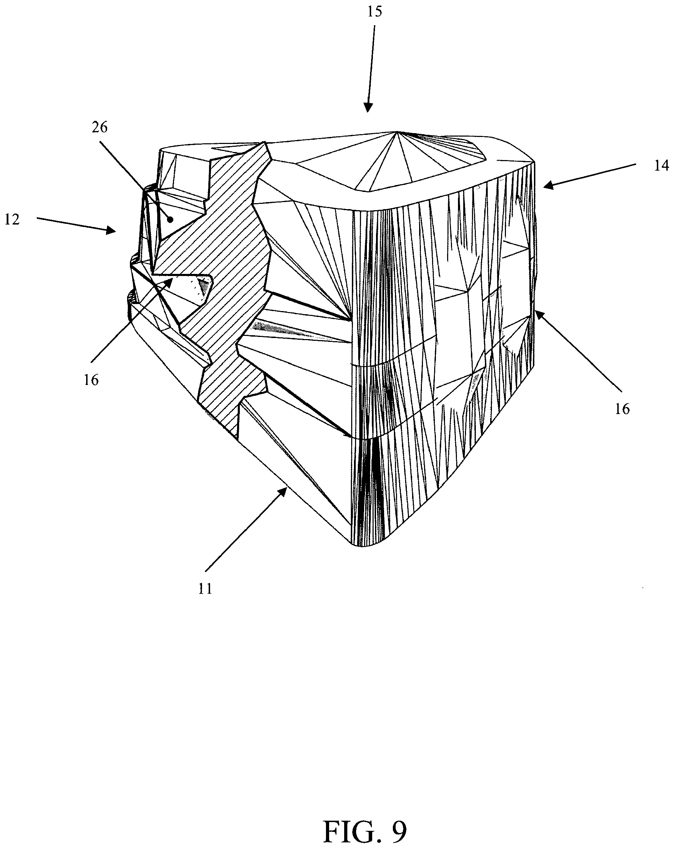

Figure 9 shows a cross-sectional view of an isolated polyhedral monobloc structure for open artificial reef in an embodiment of the present invention.

With reference to the Figures, preferred embodiments of the isolated polyhedral monobloc structure for open artificial reef and of the reef comprising a plurality of said structures according to the present invention are illustrated and described.

In a preferred embodiment, the monobloc structure 10, or spur, according to the present invention substantially has the shape of a truncated pyramid with a polygonal plan, preferably stepped, and comprises a base volume 11 and at least three lateral surfaces 12, 13, 14, at least one of said lateral surfaces comprising at least one irregular polyhedral volume 16 projecting therefrom, preferably a plurality of irregular polyhedral volumes 16, configured to deflect, deflect and weaken the flows of the incident wave motion and the flows of the return wave motion.

Preferably, the base volume 11 comprises a gripping and connection structure with the possible different structural segments.

Preferably, the monobloc structure 10 is made of concrete with cement and selected granulometric assortment, also in color, of the lava or calcareous type and/or cyclopean concrete with protruding shaped boulders in polyhedral volumes, said monobloc structure being able to increase the coefficient of resistance to the flow of wave motion and, for example, built with single-cast concrete formwork.

Preferably, said structure or spur 10 further comprises an upper surface 15, in turn comprising at least one irregular polyhedral volume 16 projecting from said upper surface 15; preferably the upper surface 15 comprises a plurality of protruding irregular polyhedral volumes 16 arranged in a radial pattern, to deflect and deflect in particular the component of the incident wave motion.

In particular, the lateral surfaces 12, 13, 14 and upper surface 15 and the polyhedral volumes 16 protruding from said surfaces 12, 13, 14, 15 are oriented in such a way as to support the natural flow of the wave motion, each irregular polyhedral volume 16 comprising at least three faces 26, for example flat, and the polyhedral volumes 16 being preferably irregular interspersed with sectors of flat surfaces 27 with a substantially horizontal or vertical course, or with a different spatial inclination; preferably the protruding polyhedral volumes 16 are arranged so as to substantially occupy all lateral surfaces 12, 13, 14 and upper surface 15.

Alternatively, the irregular polyhedral volumes 16 are connected to each other by means of sides 28 of the faces 26, said face 26 preferably having a triangular shape; preferably the upper surface 15 comprises at least one protruding irregular polyhedral volume 16 having faces 26 arranged in a radial pattern.

Preferably, each structure 10 comprises a front bulb 22 configured to join the lateral surfaces 12, 13, and the lateral polyhedral volumes, in particular the irregular polyhedral volumes 16, without producing reflective effects on the bottom; preferably one of the lateral surfaces, called the rear lateral surface 14, is in an opposite position with respect to the front bulb 22. Preferably, this rear lateral surface 14 has the shape of a cusp, so as to favor and divert the return flows of the wave, and comprises a plurality of protruding irregular polyhedral volumes 16; preferably the front bulb 22 is smooth or comprises at least one protruding irregular polyhedral volume 16.

Preferably, the rear lateral surface 14 is connected with the lateral surfaces 12, 13 by means of vertical volumes that support the distribution on the polyhedra of the secondary flows coming from the entire transversal sector of the wave motion.

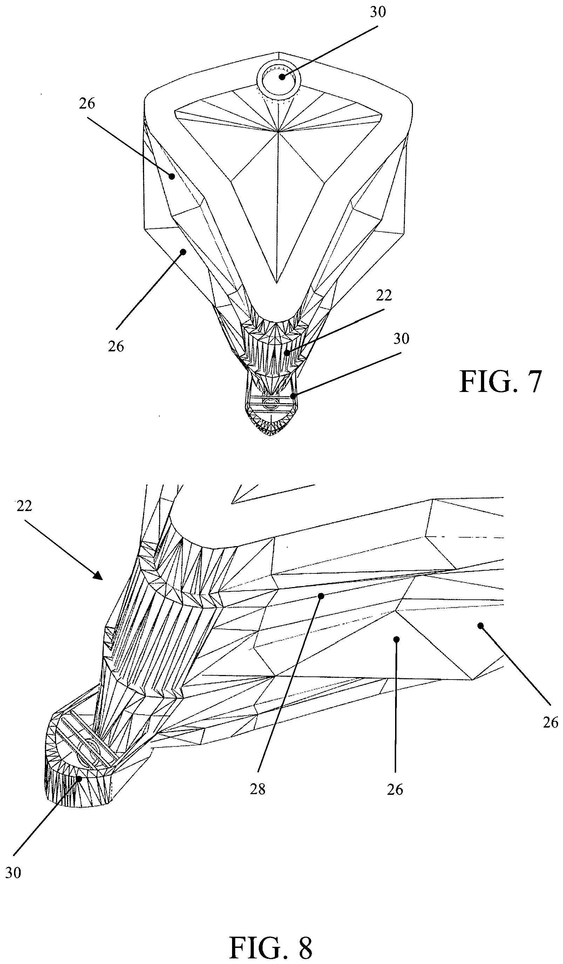

In an embodiment of the invention shown in Figures 7 and 8, the monobloc structure 10 is made with the insertion, inside the monobloc structure, of a hydraulic pipe 30, and possibly of a volume acting as a chamber for a oscillating water column OWC (Oscillating Water Column) for the production of electricity, which connects the bathometric level of support of the front bulb 22 with that of the rear lateral surface 14 of the structure itself. As a result of the abatement of the height of the wave on the surfaces of the spur in the passage of the wave, a depression occurs which will further enhance the contrast to the undulatory motions of the wave.

The open artificial reef 100 according to the present invention comprises a plurality of said structures 10 positioned at a distance from each other, in a substantially horizontal and/or orthogonal direction with respect to a direction Y of the dominant wave motion, depending on the weather characteristics marinas in the area and the presence or absence of stable infrastructures already built.

In particular, the open artificial reef 100 allows the passage of the wave motion without producing reflective effects on the seabed, which would hinder the passage of the fluvial materials useful for the reconstitution of the beaches.

In order to design an open artificial reef that is functional, it is necessary to know the dynamics of the wave motion along the strip of breakers, as well as the current state of the places and the variations undergone over the years; in fact, the spurs 10 or monobloc structures are placed on bottoms falling in the area of the breakers, to individually carry out the effects of creating weakened hydraulic fields and at the same time so that the alluvial materials transported by the wave motion can reach the shoreline with deposits on the long seabed path.

Planimetrically, therefore, the cliff 100 is positioned depending on the weather and sea conditions of the area, the bathometric trend of the dominant seabed in the breakwater area, the maximum heights of the recurring waves, the historical evolution, the design purposes.

Advantageously, the open artificial reef 100, consisting of isolated structures, has the purpose of not hindering the passage of the wave motion on the seabed and that of river materials, of favoring the reconstruction of the beach, both the submerged and the emerged one, restoring the optimal natural conditions for the progressive abatement of the waves by the beach.

The arrangement of a plurality of structures or spurs placed on the seabed spaced apart, with predetermined distances X, is that which allows a functional dynamic fluid interaction between the incident wave motion coming from the open sea on the front of the cliff 100 comprising a plurality of structures 10 and that at reduced speed of the individual structures 10 as a reaction effect generated by the flow of the incident wave motion which flows on the surfaces of the structures 10 with deflecting effects.

The combined effect is that of a front of homogeneous wave motion at a reduced speed, but always pushed by the residual energy of the original wave on waves that transport the alluvial material in suspension homogeneously along the entire front of the cliff 100.

This occurs systematically with any intensity of wave motion incident in the spaces between the submerged beach in front of the area where the spurs 10 are located and the emerged beach.

The specific dynamics of the flows of the wave motion on the deflecting surfaces of the individual structures 10 is such as not to obstruct the flow of the wave motion, in all its components, which laps the individual spurs 10.

The open artificial reef 100 is placed on bottoms falling in the breakwater area.

The train of waves that proceeds towards the shore finds on this path a series of structures 10, on which the flow of the wave action acts in such a way as to slow down its speed of advance, creating a set of fluid dynamic fields at reduced speed which expands around the structure 10. This flow at reduced speed interacts with that coming from the open sea on the entire front of the open artificial reef 100 with simultaneous dragging actions towards the shore. The residual wave that proceeds behind the cliff 100 is substantially constituted by a slowed expansion flow compared to the incident one, which determines the slowing of the flow rate and the deposit of alluvial material on the seabed near the cliff.

The flexibility of the reef 100 makes it possible to achieve nourishment effects both with reefs 100 positioned in the sea, totally or partially submerged, and on the shoreline, for direct protection of infrastructural works or artifacts.

Essential for the efficiency of the cliff 100 is the absence of reflection or refraction effects of the wave motion on the seabed and on the beaches adjacent to that of the intervention.

This allows the reconstruction of the beach, both of the one in front of the cliff 100 and of the one behind it up to and beyond the line of separation between the submerged beach and the emerged beach, therefore the reconstruction of a linear coastline consistent with a natural reconstruction of the built beach and stabilized by the ensemble of successive waves.

Operationally, the location of the individual spurs 10, which with respect to the usual rigid cliffs occupy an average surface area of 50% lower in plan, is carried out by means of a pontoon for the underwater cliffs, with mechanical means from the beach to the one where the seabed is allow or placed on the emerged beach. The presence of foundation works may be envisaged in specific cases.

Advantageously, the set of reactive effects to the hydromechanical actions of the wave motion incident on the monobloc structure, or spur, cause the slowing of the incident energy, establishing a weakened hydrodynamic field around the spur on which the hydraulic pressure of the contiguous wave acts to the spur, coming from the open sea. This favors the interaction of flows with those of the already slowed hydraulic field. Thus a different structure of a hydrodynamic wave is established, overall weakened that proceeds towards the shore according to the direction conditioned by the morphological trend of the seabed.

Furthermore, along this path the wave, encountering shallower bottoms, may suffer further slowdowns until it runs out on the emerged sand with the return of residual flows.

Along this path the stone materials are deposited on the seabed.

## Claims

1. Monobloc structure (10) comprising a base volume (11), an upper surface (15) and at least three lateral surfaces (12, 13, 14), said at least three lateral surfaces (12, 13, 14) and said upper surface (15) each comprising at least one irregular polyhedral volume (16) protruding therefrom, configured to deflect and deflect the incident wave motion and/or return flows.

2. Monobloc structure (10) according to claim 1, **characterized in that** the upper surface (15) comprises at least one protruding irregular polyhedral volume (16) having faces (26) arranged in a radial pattern, to deflect and deflect the incident wave motion.

3. Monobloc structure (10) according to claim 1 or 2, **characterized in that** the lateral surfaces (12, 13, 14) and upper surface (15) and the polyhedral volumes (16) projecting from said surfaces (12, 13, 14, 15) are oriented in such a way as to support the natural evolution of the wave motion, each irregular polyhedral volume (16) comprising at least three faces (26).

4. Monobloc structure (10) according to any one of the preceding claims, **characterized in that** the lateral (12, 13, 14) and/or upper (15) surfaces comprise a plurality of irregular polyhedral volumes (16) projecting therefrom.

5. Monobloc structure (10) according to any one of the preceding claims, **characterized in that** it comprises a front bulb (22) configured to join the lateral surfaces (12, 13) without producing reflective effects on the bottom.

6. Monobloc structure (10) according to claim 5, **characterized in that** the front bulb (22) is configured to join the irregular polyhedral volumes (16) of the lateral surfaces (12, 13).

7. Monobloc structure (10) according to any one of claims 5 to 6, **characterized in that** one of the lateral surfaces, called rear lateral surface (14), is in an opposite position with respect to the front bulb (22).

8. Monobloc structure (10) according to claim 7, **characterized in that** the rear lateral surface (14) has the shape of a cusp, so as to divert the return flows of the wave.

9. Monobloc structure (10) according to any one of claims 5 to 8, **characterized in that** it comprises, inserted inside the monobloc structure, a hydraulic pipe (30) which connects the support height of the front bulb (22) with that of the rear lateral surface (14) of the structure itself.

10. Monobloc structure (10) according to claim 9, **characterized in that** it comprises a volume as a chamber for an oscillating water column system (OWC) for the production of electrical energy.

11. Monobloc structure (10) according to any one of the preceding claims, **characterized in that** the protruding polyhedral volumes (16) are arranged so as to substantially occupy all the lateral (12, 13, 14) and upper (15) surfaces.

12. Open artificial reef (100) comprising a plurality of monobloc structures (10) according to any one of the preceding claims, said structures (10) being positioned at a distance from each other, in a substantially horizontal and/or orthogonal direction with respect to a direction (Y) of the dominant wave motion.
